# EUROPÄISCHE PATENTANMELDUNG

(11) **EP 4 618 594 A1**
(43) Veröffentlichungstag der Anmeldung: **17.09.2025**
(21) Anmeldenummer: 25157326.7
(22) Anmeldetag: 12.02.2025
(51) Int. Cl.: H04R 25/00

(54) **VERFAHREN ZUM BETRIEB EINES HÖRGERÄTESYSTEMS**

(30) Priorität: 13.03.2024 DE 102024202373
(71) Anmelder: Sivantos Pte. Ltd., Singapore 539775 (SG)
(72) Erfinder: NIKLES, Peter, 91058 Erlangen (DE); HASANI, Hamed, 91058 Erlangen (DE); PFROMMER, Andreas, 91058 Erlangen (DE)
(74) Vertreter: FDST Patentanwälte

(57) **Zusammenfassung**

Die Erfindung betrifft ein Verfahren (26) zum Betrieb eines Hörgerätesystems (4), das ein einen Sensor (22) und eine erste Funkkommunikationseinrichtung (20) aufweisendes Hörgerät (6) und ein weiteres Gerät umfasst. Mittels des Sensors (22) wird eine manuelle Betätigung erfasst, und von dem Hörgerät (6) wird eine Aufforderung (32) zur Abgabe eines Testsignals (34) an das weitere Gerät gesandt. Mittels des weiteren Geräts wird das Testsignal (34) an das Hörgerät (6) gesandt und von diesem mittels der ersten Funkkommunikationseinrichtung (20) empfangen. Anhand von physikalischen Eigenschaften des empfangenen Testsignals (34) wird die manuelle Betätigung verifiziert. Die Erfindung betrifft ferner ein Hörgerätesystem (4).

## Beschreibung

Die Erfindung betrifft ein Verfahren zum Betrieb eines Hörgerätesystems und ein Hörgerätesystem. Das Hörgerätesystem umfasst ein Hörgerät mit einem Sensor und einer ersten Funkkommunikationseinrichtung.

Personen, die unter einer Verminderung des Hörvermögens leiden, verwenden üblicherweise ein Hörhilfegerät, das ein Hörgerät ist. Hierbei wird meist mittels eines Mikrofons, also eines elektromechanischen Schallwandlers, ein Umgebungsschall in ein elektrisches (Audio-/Schall-)Signal gewandelt, sodass das elektrische Signal erfasst wird. Die erfassten elektrischen Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der erfassten Schallsignale, wofür üblicherweise ein Signalprozessor der Verstärkerschaltung verwendet wird. Hierbei ist die Verstärkung auf einen etwaigen Hörverlust des Hörgeräteträgers abgestimmt.

Je nach aktueller Situation ist es hierbei möglich, dass von der Person, also dem Nutzer, eine andere Verstärkung gewünscht ist. Auch ist es möglich, dass von dem Nutzer zeitweise eine bestimmte Funktionalität des Hörgeräts gewünscht wird, wie beispielsweise die Verwendung einer Richtcharakteristik, sodass Umgebungsschall aus einer bestimmten Richtung bevorzugt verstärkt wird. Alternativ oder in Kombination hierzu ist eine derartige Funktionalität eine Rauschunterdrückung, mittels derer beispielsweise Windgeräusche oder dergleichen in verringertem Maße wiedergegeben werden. Zum Start der der Funktionalität ist eine entsprechende Eingabe durch den Nutzer erforderlich, was meist mittels einer manuellen Betätigung erfolgt. Hierfür weist das Hörgerät beispielsweise einen mechanischen Schalter auf. Im Bereich des Schalters können jedoch Flüssigkeiten oder dergleichen in das Hörgerät eindringen. Eine Alternative sieht daher vor, einen kapazitiven Sensor zu verwendenden. Mittels dessen ist es möglich, eine Annäherung eines Fingers des Nutzers an das Hörgerät zu erfassen und Abhängigkeit hiervon die bestimmte Funktionalität auszulösen.

Aus ästhetischen Gründen soll das Hörgerät meist vergleichsweise kleinbauend sein. Dann ist es jedoch möglich, dass die in dem kapazitiven Sensor zugeordnete Berührungsfläche des Hörgeräts zumindest teilweise von anderen Bestandteilen des Körpers ab- oder überdeckt ist, wie Teilen der Ohrmuschel. Wenn die Sensitivität des Sensors vergleichsweise hoch eingestellt ist, ist es möglich, dass bereits geringe Veränderungen der Lage des Hörgeräts bezüglich des Ohrs oder geringfügige Bewegungen des Ohrs, die jeweils beispielsweise aufgrund einer körperlichen Aktivität hervorgerufen werden, zum ungewollten Auslösen der Funktionalität führen. Falls hingegen die Sensitivität vergleichsweise gering eingestellt wird, ist es möglich, dass eine tatsächliche Berührung durch den Nutzer nicht erfasst wird, sodass die Funktionalität nicht durchgeführt wird.

Der Erfindung liegt die Aufgabe zugrunde, ein besonders geeignetes Verfahren zum Betrieb eines Hörgerätesystems sowie ein besonders geeignetes Hörgerätesystem anzugeben, wobei insbesondere eine Bedienung für einen Nutzer verbessert ist.

Hinsichtlich des Verfahrens wird diese Aufgabe durch die Merkmale des Anspruchs 1 und hinsichtlich des Hörgerätesystems durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient dem Betrieb eines Hörgerätesystems. Das Hörgerätesystem umfasst ein Hörgerät. Beispielsweise ist das Hörgerät ein Kopfhörer oder umfasst einen Kopfhörer. Alternativ ist das Hörgerät ein Headset, True Wireless Headphone, Hearable, Personal Sound Amplifier. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. In einer weiteren Alternative ist das Hörhilfegerät ein Hinter-dem-Ohr-Hörhilfegerät ("Behind-the-Ear"-Hörhilfegerät), das hinter einer Ohrmuschel getragen wird.

Das Hörgerät ist vorgesehen und eingerichtet, am menschlichen Körper getragen zu werden. Mit anderen Worten umfasst das Hörgerät bevorzugt eine Haltevorrichtung, mittels derer eine Befestigung am menschlichen Körper möglich ist. Sofern es sich bei dem Hörgerät um ein Hörhilfegerät handelt, ist das Hörgerät vorgesehen und eingerichtet, beispielsweise hinter dem Ohr oder innerhalb eines Gehörgangs angeordnet zu werden. Insbesondere ist das Hörgerät kabellos und dafür vorgesehen und eingerichtet, zumindest teilweise in einen Gehörgang eingeführt zu werden. Besonders bevorzugt umfasst das Hörgerät einen Energiespeicher, mittels dessen eine Energieversorgung bereitgestellt ist.

Das Hörgerät umfasst vorzugsweise ein Mikrofon, das dem Erfassen von Schall dient. Insbesondere wird bei Betrieb mittels des Mikrofons ein Umgebungsschall erfasst, oder zumindest ein Teil hiervon. Bei dem Mikrofon handelt es sich insbesondere um einen elektromechanischen Schallwandler. Das Mikrofon weist beispielsweise lediglich eine einzige Mikrofoneinheit oder mehrere Mikrofoneinheiten auf, die miteinander wechselwirken. Jede der Mikrofoneinheiten weist zweckmäßigerweise eine Membran auf, die anhand von Schallwellen in Schwingungen versetzt wird, wobei die Schwingungen mittels eines entsprechenden Aufnahmegeräts, wie eines Magneten, der in einer Spule bewegt wird, in ein elektrisches Signal gewandelt wird. Somit ist es möglich, mittels der jeweiligen Mikrofoneinheit ein Audiosignal zu erfassen, das auf dem auf die Mikrofoneinheit auftreffendem Schall basiert. Die Mikrofoneinheiten sind insbesondere unidirektional ausgestaltet. Das Mikrofon ist zweckmäßigerweise zumindest teilweise innerhalb eines Gehäuses des Hörgeräts angeordnet und somit zumindest teilweise geschützt.

Zweckmäßigerweise weist das Hörgerät einen Hörer zum Ausgeben eines Ausgabesignals auf. Das Ausgabesignal ist hierbei insbesondere ein elektrisches Signal. Der Hörer ist ein elektromechanischer Schallwandler, vorzugsweise ein Lautsprecher. Je nach Ausgestaltung des Hörgeräts ist im bestimmungsgemäßen Zustand der Hörer zumindest teilweise innerhalb eines Gehörgangs eines Trägers des Hörgeräts, also einer Person, angeordnet oder zumindest akustisch mit diesem verbunden. Der Träger wird im Weiteren auch als Nutzer, Hörgerätträger oder Benutzer bezeichnet. Das Hörgerät dient insbesondere hauptsächlich dem Ausgeben des Ausgabesignals mittels des Hörers, wobei entsprechender Schall erstellt wird. Mit anderen Worten ist die Hauptfunktion des Hörgeräts das Ausgeben des Ausgabesignals. Das Ausgabesignal ist dabei insbesondere zumindest teilweise in Abhängigkeit des mittels des Mikrofons erfassten Schalls erstellt. Alternativ ist das Ausgabesignal in Abhängigkeit eines übertragenen Datensignals (Audiosignal) erstellt, oder das Datensignal wird hierfür verwendet. Mit anderen Worten wird das Ausgabesignal insbesondere anhand eines Streamings-Vorgangs erstellt, oder es handelt sich hierbei um eine Wiedergabe eines bestimmten Samples.

Das Hörgerät umfasst zweckmäßigerweise einen Signalprozessor, der geeigneterweise eine Signalverarbeitungseinheit bildet oder zumindest ein Bestandteil hiervon ist. Zumindest jedoch umfasst das Hörgerät zweckmäßigerweise eine entsprechende Signalverarbeitungseinheit. Der Signalprozessor ist beispielsweise ein digitaler Signalprozessor (DSP) oder mittels analoger Komponenten realisiert. Mittels des Signalprozessors erfolgt insbesondere eine Anpassung des mittels des etwaigen Mikrofons erstellten /übertragenen (Audio-)Signals, vorzugsweise in Abhängigkeit eines etwaigen Hörverlust eines Trägers des Hörgeräts. Zweckmäßigerweise ist zwischen dem Mikrofon und der Signalverarbeitungseinheit, beispielsweise dem Signalprozessor, ein A/D-Wandler angeordnet, sofern der Signalprozessor als digitaler Signalprozessor ausgestaltet ist. Der Signalprozessor ist insbesondere in Abhängigkeit eines Parametersatzes eingestellt. Mittels des Parametersatzes wird dabei eine Verstärkung in unterschiedlichen Frequenzbereichen vorgegeben, sodass das mittels des Mikrofons erstellte / übertragene Audiosignal entsprechend bestimmter Vorgaben bearbeitet wird, insbesondere in Abhängigkeit eines Hörverlust des Trägers des Hörgeräts. Besonders bevorzugt umfasst das Hörgerät zusätzlich einen Verstärker, oder der Verstärker ist mittels des Signalprozessors zumindest teilweise gebildet. Beispielsweise ist der Verstärker signaltechnisch dem Signalprozessor vor- oder nachgeschaltet.

Das Hörgerät weist ferner eine erste Funkkommunikationseinrichtung auf, die zweckmäßigerweise mit der etwaigen Signalverarbeitungseinheit und/oder dem etwaigen Hörer verbunden ist. Die erste Funkkommunikationseinrichtung dient dabei insbesondere dem Empfangen des zu übertragenden Audiosignals/Datensignals und/oder von Steuerungsparametern/Einstellungen für die etwaige Signalverarbeitungseinheit oder ein sonstiges Steuergerät des Hörgeräts. Alternativ oder in Kombination hierzu dient die Funkkommunikationseinrichtung insbesondere dem Übermitteln von Daten von dem Hörgerät zu einem weiteren Gerät des Hörgerätesystems.

Das Hörgerät weist ferner einen Sensor auf. Der Sensor dient der manuellen Betätigung, sodass es möglich ist, mittels des Sensors eine manuelle Betätigung zu erfassen. Hierfür ist der Sensor geeignet, insbesondere vorgesehen und eingerichtet. Zum Erfassen der manuellen Betätigung werden mittels des Sensors geeigneterweise entsprechende Messdaten/Signalen erzeugt, die beispielsweise mittels der etwaigen Signalverarbeitungseinheit oder sonstiger Bestandteile des Hörgeräts/Sensors ausgewertet werden.

Das andere Gerät ist beispielsweise ein tragbares Gerät, und zum Beispiel ein Smartphone oder Wearable. Alternativ hierzu ist das weitere Gerät ein weiteres Hörgerät, das beispielsweise baugleich oder zumindest ähnlich zu dem Hörgerät ist. Insbesondere sind die Hörgeräte lediglich anhand der äußeren Maße abgeändert, und eines davon ist dem linken und das andere dem rechten Ohr des Nutzers zugeordnet sind. Mit anderen Worten sind die beiden Hörgeräte spiegelbildlich aufgebaut. Alternativ hierzu weist beispielsweise das weitere Hörgerät keinen Sensor auf. Sofern das weitere Gerät ein Hörgerät ist, ist das Hörgerätesystem insbesondere binaural ausgestaltet. Zumindest ist es möglich, mittels der ersten Funkkommunikationseinrichtung des Hörgeräts mit dem weiteren Gerät zu kommunizieren und somit zwischen dem Hörgerät und dem weiteren Gerät Daten/Signale auszutauschen, nämlich mittels Funks.

Bei dem Verfahren wird mittels des Sensors eine manuelle Betätigung erfasst. Hierfür werden mittels des Sensors geeigneterweise entsprechende Messdaten erzeugt, die insbesondere auf die manuelle Betätigung hinweisen. Mit anderen Worten werden somit entsprechende Signale/Messdaten erfasst oder erzeugt, die auch bei einer manuellen Betätigung erfasst werden. Jedoch ist es möglich, dass derartige Signale/ Messdaten auch aufgrund einer Fehlfunktion oder sonstiger Umstände hervorgerufen werden. Mit anderen Worten ist nach dem Erfassen der manuellen Betätigung nicht sichergestellt, dass auch eine tatsächliche manuellen Betätigung durch den Nutzer erfolgte. Zusammenfassend ist es möglich, dass die manuelle Betätigung erfasst wird, obwohl diese tatsächlich nicht stattgefunden hat.

Nach dem Erfassen wird von dem Hörgerät eine Aufforderung zur Abgabe eines Testsignals an das weitere Gerät gesandt. Mittels des weiteren Geräts wird diese Aufforderung empfangen. Beispielsweise ist das Testsignal stets gleich oder an die Anforderung angepasst. Alternativ oder in Kombination hierzu erfolgt eine Anpassung an eine aktuelle Situation des Hörgerätesystems und/oder des Hörgeräts, die mittels des weiteren Geräts und/oder mittels des Hörgeräts ermittelt und in der Aufforderung übertragen wird.

Mittels des weiteren Geräts wird nachfolgend das Testsignal an das Hörgerät gesandt und von diesem mittels der ersten Funkkommunikationseinrichtung empfangen. Mit anderen Worten wird das Testsignal somit mittels Funks von dem weiteren Gerät zu dem Hörgerät übermittelt. Das Aussenden des Testsignals erfolgt nach Empfangen der Aufforderung zum Beispiel in einem bestimmten zeitlichen Abstand, oder besonders bevorzugt unverzüglich, sodass die Zeitspanne verringert ist, bis das Testsignal von dem Hörgerät empfangen wird.

Anhand von physikalischen Eigenschaften des empfangenen Testsignals wird die die manuelle Betätigung verifiziert. Zweckmäßigerweise werden hierfür die physikalischen Eigenschaften des empfangenen Testsignals ermittelt, insbesondere mittels des Hörgeräts. Hierfür wird insbesondere das Testsignal analysiert, beispielsweise dessen Empfangsstärke, Frequenz, Länge und/oder sonstige Eigenschaften. Insbesondere wird für die Verifikation nicht der Inhalt des Testsignals selbst berücksichtigt, und dieses ist beispielsweise lediglich mittels einer periodischen Schwingung gebildet. Zusammenfassend wird für die Verifikation der manuellen Betätigung nicht der Inhalt des Testsignals selbst berücksichtigt, und der Inhalt des Testsignals selbst ist beispielsweise stets gleich oder unabhängig von einer aktuellen Situation des Hörgeräts.

Sofern die manuelle Betätigung tatsächlich erfolgt, befindet sich eine Hand oder sonstige Extremität des Nutzers (kurzzeitig) zusätzlich im Bereich des Sensors und somit auch im Bereich der ersten Funkkommunikationseinrichtung. Infolgedessen wird das Testsignal, das zu dem Hörgerät gesandt wird, zumindest teilweise mittels der Hand/Extremität verfälscht/verändert oder zumindest abgewandelt, was sich in den physikalischen Eigenschaften widerspiegelt. Anhand dieser erfolgt dann die Verifikation der manuellen Betätigung. Falls die Veränderung nicht vorhanden ist, befindet sich somit auch die Hand nicht im Bereich der ersten Funckommunikationseinrichtung. In diesem Fall ist die manuelle Betätigung nicht verifiziert. Zusammenfassend wird die manuelle Betätigung somit insbesondere verifiziert, wenn eine Veränderung des Testsignals vorhanden ist.

Erst wenn die manuelle Betätigung verifiziert wurde, wird insbesondere eine entsprechende Funktion/Funktionalität des Hörgerätesystems durchgeführt. Mit anderen Worten wird die verifizierte manuelle Betätigung als eine (Nutzer-)Eingabe herangezogen. Aufgrund des Verfahrens werden lediglich tatsächliche manuelle Betätigungen verifiziert und somit als Eingabe verwendet, wobei es nicht erforderlich ist, eine Sensitivität des Sensors zu reduzieren, sodass beispielsweise tatsächlich durchgeführte manuelle Betätigung nicht erfasst werden. Vielmehr ist es möglich, die Sensitivität des Sensors zu erhöhen, sodass mittels dessen beispielsweise auch fälschlicherweise manuelle Betätigung erfasst werden. Mittels der nachfolgenden Verifikation werden dabei die fälschlich erfassten manuellen Betätigungen aussortiert, und lediglich tatsächliche manuelle Betätigungen werden verifiziert. Somit wird bei dem Verfahren nicht fälschlicherweise eine Funktion/ Funktionalität ausgelöst, und sämtliche tatsächlichen manuellen Betätigungen des Nutzers werden als verifizierte manuelle Betätigung von dem Hörgerätesystem erfasst. Somit verhält sich das Hörgerätesystem entsprechend der Eingaben des Nutzers, und ein Komfort für diesen ist erhöht. Hierbei ist es auch nicht erforderlich, im Wesentlichen kontinuierlich das Testsignal von dem weiteren Gerät zu dem Hörgerät zu übertragen, sondern dies erfolgt erst, nachdem der entsprechende Hinweis auf die tatsächliche manuelle Betätigung vorliegt, also die manuelle Betätigung erfasst wurde. Somit ist ein Energiebedarf verringert. Auch ist eine Strahlenbelastung des Nutzers verringert.

Das Verfahren dient somit insbesondere dem verifizierten Erfassen der manuellen Betätigung des Hörgerätesystems, insbesondere des Hörgeräts. Als eine manuelle Betätigung wird beispielsweise eine Berührung herangezogen oder zumindest eine Annäherung, sodass die manuelle Betätigung insbesondere eine berührungslose Betätigung ist. Beispielsweise korrespondiert die manuelle Betätigung zu einer Geste und weist daher einen zeitlichen Verlauf/Veränderung auf. Zum Beispiel ist das Berühren ein einmaliges oder mehrmaliges Tippen oder ein kontinuierliches, für eine bestimmte Zeitspanne andauerndes Berühren herangezogen.

Insbesondere wird in Abhängigkeit der verifizierten erfassten manuellen Betätigung, also der Eingabe, eine bestimmte Funktion/Funktionalität des Hörgeräts durchgeführt. Insbesondere erfolgt dabei eine Auswahl von anderen Steuerungsparametern, und/oder die erste Funkkommunikationseinrichtung wird für das Empfangen und/oder Sendern von anderen (Nutz-)Daten/(Nutz-)Signalen verwendet. Beispielsweise erfolgt in Abhängigkeit der Eingabe eine Auswahl von Signalen, die dem Signalprozessor und/oder dem Hörer zugeführt werden, sodass das Hörgerät beispielsweise zwischen der Wiedergabe von Umgebungsschall oder der Ausgabe von dem mittels der ersten Funkkommunikationseinrichtung empfangenen Signalen umgeschaltet wird.

Beispielsweise wird dies Aufforderung kabelgebundenen zu dem weiteren Gerät übertragen. Besonders bevorzugt jedoch erfolgt dies auch kabellos, insbesondere mittels Funks. Beispielsweise wird zum Übertragen der Aufforderung von dem Hörgerät zum weiteren Gerät ebenfalls die erste Funkkommunikationseinrichtung verwendet. Alternativ hierzu wird eine andere Funkkommunikationseinrichtung herangezogen, insbesondere eine zweite (Funk-)Kommunikationseinrichtung.

Beispielsweise genügt die Aufforderung einem bestimmten Standard, beispielsweise einem WLAN-Standard, einem Bluetooth-Standard oder einem UWB-Standard. Besonders bevorzugt wird die Aufforderung mittels magnetischer Induktion zu dem weiteren Gerät übertragen. Hierfür wird insbesondere die zweite Funkkommunikationseinrichtung herangezogen. Insbesondere wird hierfür NFMI ("Near Field Magnetic Induction") verwendet. Eine derartige Übertragung ist vergleichsweise robust, und wird aufgrund der etwaigen Anwesenheit der Hand des Nutzers lediglich vergleichsweise gering beeinflusst. Somit ist sichergestellt, dass die Aufforderung mittels des weiteren Geräts empfangen wird, und dass das Testsignal ausgesandt wird. Falls somit das Testsignal mittels der ersten Funkkommunikationseinrichtung lediglich schwach oder nicht empfangen wird, liegt dies insbesondere an die Funktionsweise der ersten Funkkommunikationseinrichtung störenden Einflussfaktoren, wie der Hand, jedoch nicht daran, dass die Aufforderung nicht von dem weiteren Gerät empfangen und somit nicht ausgesandt wurde. Zudem ist für das Senden der Aufforderung lediglich eine geringe Datenmenge erforderlich, sodass sich etwaige Beschränkungen bei der Übertragung mittels magnetischer Induktion nicht auswirken. Auch ist auf diese Weise sichergestellt, dass die Aufforderung tatsächlich von dem weiteren Gerät empfangen wird,

Beispielsweise wird das Testsignal mittels magnetischer Induktion zu dem Hörgerät übertragen. Besonders bevorzugt jedoch wird das Testsignal mittels Bluetooth zu dem Hörgerät übertragen. Somit genügt die erste Funkkommunikationseinrichtung dem Bluetooth-Standard. Infolgedessen ist es möglich für die erste Funkkommunikationseinrichtung bereits bestehende Komponenten heranzuziehen, sodass Herstellungskosten reduziert sind. Auch ist es aufgrund des Bluetooth-Standards möglich, die erste Funkkommunikationseinrichtung auch für weitere Funktionen des Hörgerätesystems heranzuziehen, beispielsweise zum Empfangen des etwaigen Datensignals/Audiosignals und/oder von Steuerungsparametern. Somit ist benötigte Hardware verringert. Auch ist es beispielsweise möglich, ein weiteres Gerät heranzuziehen, das bereits vorhanden und zum Übertragen von Bluetooth-Signalen vorgesehen ist. Aufgrund des Bluetooth-Standards weist das Testsignal insbesondere einen Trägerfrequenz zwischen 2,4 GHz und 2,5 GHz auf. Infolgedessen wird bei Vorhandensein der Hand oder einer sonstigen Extremität im Bereich der ersten Funkkommunikationseinrichtung das Testsignal vergleichsweise stark beeinflusst/verändert, was sich in den physikalischen Eigenschaften des empfangenen Testsignals widerspiegelt. Somit ist eine fehlerhafte Verifikation im Wesentlichen ausgeschlossen.

Geeigneterweise weist das weitere Gerät ebenfalls eine erste Funkkommunikationseinrichtung oder zumindest eine dem Bluetooth-Standard genügende Funckommunikationseinrichtung auf. Zum Beispiel wird beim Senden des Testsignals die Funkkommunikationseinrichtung des weiteren Geräts unverändert betrieben. Besonders bevorzugt jedoch wird das Testsignal mit einer erhöhten Signalstärke gesandt. Da das Testsignal vergleichsweise kurz ist, ist der Energiebedarf lediglich gering erhöht. Jedoch ist auf diese Weise eine Veränderung der physikalischen Eigenschaften vergleichsweise genau erfassbar.

Beispielsweise wird das Testsignal lediglich einkanalig zu dem Hörgerät übertragen. Somit ist ein Energiebedarf verringert. Zum Beispiel wird hierbei stets der gleiche Kanal, insbesondere die gleiche Frequenz, herangezogen. Somit ist das Empfangen des Testsignals erleichtert, und es ist nicht erforderlich, hierfür mehrere Kanäle zu überwachen, was eine Robustheit erhöht und einen Energiebedarf verringert. Alternativ hierzu wird der Kanal, in dem das Testsignal übertragen wird, in Abhängigkeit von bestimmten Bedingungen festgelegt und/oder an die aktuelle Situation angepasst. Insbesondere wird hierfür ein Kanal verwendet, in dem ansonsten vergleichsweise wenig Aktivität herrscht, sodass das Testsignal nicht durch anderweitige Einflüsse gestört wird. Alternativ hierzu wird das Testsignal mehrkanalig zu dem Hörgerät übertragen. Vorzugsweise wird das Testsignal dabei auch mehrkanalig von dem Hörgerät empfangen. Mit anderen Worten umfasst das Testsignal mehrere Anteile, die insbesondere stets den gleichen Inhalt aufweisen, die jedoch unterschiedlichen Kanälen zugeordnet sind. Somit ist ein vergleichsweise genaues Ermitteln der physikalischen Eigenschaften ermöglicht, und falls einer Veränderung vorhanden ist, kann überprüft werden, ob lediglich in einem einzigen Kanal vorhanden ist, was zum Beispiel ein Hinweis auf eine Störquelle, jedoch nicht die Anwesenheit der Hand ist. Falls die Veränderung jedoch breitbandig ist, und zum Beispiel sämtliche Kanäle/Anteile betrifft, befindet sich die Hand in der Umgebung, sodass die Verifikation der manuellen Betätigung vereinfacht ist. Aufgrund der Mehrkanaligkeit des Testsignals ist sichergestellt, dass bei einer Störung in einem der Kanäle dennoch ein Anteil des Testsignals von dem Hörgerät empfangen wird. Beispielsweise werden mittels des Hörgeräts die physikalischen Eigenschaften lediglich eines einzigen Anteils des Testsignals ausgewertet. Somit ist ein Aufwand verringert. Bevorzugt jedoch werden sämtliche empfangenen Teile des Testsignals ausgewertet, sodass eine Genauigkeit bei der Ermittlung der physikalischen Eigenschaften verbessert ist.

Beispielsweise wird als physikalische Eigenschaft eine Resonanzverschiebung herangezogen. Wenn sich die Hand des Nutzers im Bereich des Sensors und somit auch im Bereich der ersten Funkkommunikationseinrichtung befindet, wird die Resonanzfrequenz der ersten Funkkommunikationseinrichtung verschoben. Die Frequenz des Testsignals hingegen ist insbesondere gleich, und die Signalstärke des empfangenen Testsignals ist umso geringer, je weiter dieses von der Resonanzfrequenz entfernt ist. Infolgedessen ist es möglich, anhand der Signalstärke Rückschlüsse auf die Resonanzverschiebung und somit darauf zu ziehen, ob sich die Hand im Bereich der erste Funkkommunikationseinrichtung befindet. Falls keine Resonanzverschiebung vorhanden ist, oder diese geringer als ein zugeordneter Grenzwert ist, ist dabei die Hand nicht vorhanden. Somit ist ein vergleichsweise robustes Verifizieren ermöglicht, wobei hierfür keine umfangreichen Berechnungen erforderlich ist. Alternativ hierzu ist die erste Funkkommunikationseinrichtung derart ausgestaltet, dass diese stets im Bereich deren Resonanz betrieben wird, also insbesondere auch beim Empfang des Testsignals. Somit ist aufgrund des Betriebs der ersten Funkkommunikationseinrichtung bereits bekannt, um welches Maß eine Resonanzverschiebung vorhanden, sodass keine zusätzliche Auswertung erforderlich ist. Somit ist ein Aufwand weiter reduziert.

Alternativ oder in Kombination hierzu wird als physikalische Eigenschaft der RSSI ("Received Signal Strength Indication") oder das Signal- zu-Rausch-Verhältnis (SNR; Signal to niose ratio) des Testsignals herangezogen. Mit anderen Worten wird der RSSI des Testsignals ermittelt. Zur Verifikation wird dieser mit einem Vergleichswert verglichen. Sofern das Testsignal einen vergleichsweise geringen RSSI/Stärke und/oder geringes Signal-zu-Rauschverhältnis aufweist, ist die manuelle Betätigung verifiziert. Wenn der RSSI kleiner als der Vergleichswert ist, ist insbesondere die manuelle Betätigung verifiziert. Sofern die Hand nämlich vorhanden ist, erfolgt eine übermäßige Dämpfung des Testsignals, sodass der RSSI vergleichsweise gering ist. Wenn der RSSI geringer als der Vergleichswert ist, ist die manuelle Betätigung verifiziert. Hierbei wird beispielsweise bereits im Rahmen der Funkkommunikation mittels der ersten Funkkommunikationseinrichtung, also im Normalbetrieb, der RSSI erstellt/ermittelt und anhand dessen beispielsweise Parameter der erste Funkkommunikationseinrichtung angepasst. Somit ist im Wesentlich kein zusätzlicher Aufwand vorhanden, und eine spezielle Anpassung ist nicht erforderlich. Beispielsweise ist der Vergleichswert konstant oder zeitlich abhängig. In diesem Fall wird insbesondere eine Geste als manuelle Betätigung verifiziert.

Der Vergleichswert ist beispielsweise spezifisch für das Hörgerät und wird zum Beispiel von einem Hersteller des Hörgeräts ermittelt und in diesem hinterlegt. Dies erfolgt beispielsweise für jedes Hörgerät individuell oder für die jeweilige Art des Hörgeräts, also den Hörgerätetyp. Alternativ hierzu ist der Vergleichswert auf den jeweiligen Nutzer angepasst. Hierbei wird beispielsweise bei Erstinbetriebnahme oder im Rahmen einer Einstellung des Hörgeräts, einmalig oder mehrmalig, der Vergleichswert ermittelt. In diesem Fall wird insbesondere eine Routine durchgeführt, bei von dem weiteren Gerät das Testsignal zu dem Hörgerät übertragen wird, wobei der Nutzer aufgefordert ist, seine Hand von dem Hörgerät zu beabstanden. Bei einem nachfolgenden Übertragen des Testsignals hingegen ist der Nutzer aufgefordert, seine Hand im Bereich des Hörgeräts zu halten oder entsprechend einer Geste zu bewegen. Anhand der Veränderung zwischen den beiden empfangenen Testsignalen wird der Vergleichswert ermittelt und im Hörgerät hinterlegt. Die Aufforderungen an den Nutzer werden zum Beispiel mittels des etwaigen Hörers ausgegeben. Alternativ hierzu wird hierfür eine sogenannte App verwendet, die auf einem Smartphone oder einem Wearabel ausgeführt wird. Beispielsweise stellte dieses das weitere Gerät dar, oder das Smartphone/ Wearabel ist zusätzlich zu dem weiteren Gerät vorhanden. Aufgrund der Anpassung an den Nutzer werden dessen physiologische Eigenschaften berücksichtigt, sodass keine fälschliche Verifikation einer fehlerhaft erfassten manuellen Betätigung erfolgt. Somit ist ein Komfort weiter erhöht.

In einer Alternative wird als Vergleichswert der Mittelwert des RSSI von mittels der ersten Funkkommunikationseinrichtung empfangenen weiteren Signale herangezogen. Mit anderen Worten werden mittels der weiteren Funkkommunikationseinrichtung die weiteren Signale empfangen, die insbesondere einen bestimmten Inhalt aufweisen, anhand dessen eine Einstellung oder eine sonstige Beeinflussung des Hörgeräts erfolgt. Zweckmäßigerweise genügt hierbei die erste Funkkommunikationseinrichtung dem Bluetooth-Standard, und die weiteren Signale enthalten insbesondere Daten, die für den Betrieb des Hörgeräts genutzt werden. Mit anderen Worten handelt es sich hierbei um Nutzsignale. Für jedes dieser weiteren Signale wird der RSSI erstellt, beispielsweise lediglich aufgrund des Verfahrens oder bereits, im Rahmen des Normalbetriebs der ersten Funkkommunikationseinrichtung. Der Mittelwert dieser RSSI wird gebildet, beispielsweise der arithmetische, der gleitende oder der exponentielle Mittelwert. Dieser Mittelwert stellt dann den Vergleichswert dar, oder der Mittelwert wird zusätzlich mit einem Faktor multipliziert. Aufgrund der Verwendung des Mittelwerts erfolgt eine vergleichsweise genaue Anpassung an die jeweils aktuelle Situation, sodass die manuelle Betätigung auch in vergleichsweise ungünstigen Situationen/Umgebungen sicher und fehlerfrei verifizieren kann.

Das Hörgerätesystem umfasst ein weiteres Gerät und ein Hörgerät. Das Hörgerät weist vorzugsweise ein Mikrofon, eine Ausgabevorrichtung und eine Signalverarbeitungseinheit auf. Mittels dieser ist insbesondere ein Signalpfad gebildet, und das Mikrofon dient vorzugsweise dem Erfassen von Schall und die Ausgabevorrichtung geeigneterweise dem Ausgeben von Schall. Beispielsweise ist das Hörgerät ein Kopfhörer oder umfasst einen Kopfhörer. Hierbei ist das Hörgerät beispielsweise als ein sogenanntes Headset ausgestaltet. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Besonders bevorzugt ist das Hörhilfegerät ein Hinter-dem-Ohr-Hörhilfegerät ("Behind-the-Ear"-Hörhilfegerät), das hinter einer Ohrmuschel getragen wird.

Das Hörgerät weist eine erste Funkkommunikationseinrichtung und einen Sensor auf. Das weitere Gerät umfasst zweckmäßigerweise ebenfalls eine erste Funckommunikationseinrichtung. Die beiden ersten Funkkommunikationseinrichtungen erfüllt hierbei zweckmäßigerweise den gleichen Standard. Hierbei ist es möglich, das Hörgerät und das weitere Gerät mittels einer Funkverbindung signaltechnisch zu verbinden, wofür die beiden ersten Funkkommunikationseinrichtungen verwendet werden.

Das Hörgerätesystem ist gemäß einem Verfahren betrieben, bei dem mittels des Sensors eine manuelle Betätigung erfasst wird. Von dem Hörgerät wird eine Aufforderung zur Abgabe eines Testsignals an das weitere Gerät gesandt wird, wofür zweckmäßigerweise eine zweite Funkkommunikationseinrichtung des Hörgeräts und/oder des weiteren Geräts verwendet wird. Mittels des weiteren Geräts wird das Testsignal an das Hörgerät gesandt, insbesondere mittels der etwaigen ersten Funkkommunikationseinrichtung des weiteren Geräts, und von dem Hörgerät mittels der ersten Funkkommunikationseinrichtung empfangen. Anhand von physikalischen Eigenschaften des empfangenen Testsignals wird die manuelle Betätigung verifiziert. Falls eine Verifikation erfolgt, wird dies als Eingabe des Benutzers herangezogen, anderenfalls wird das Hörgerätesystem insbesondere derart betrieben als, also ob die manuelle Betätigung nicht erfasst worden wäre.

Das Hörgerät umfasst zweckmäßigerweise einen Signalprozessor, der geeigneterweise die Signalverarbeitungseinheit bildet oder zumindest ein Bestandteil hiervon ist. Der Signalprozessor ist beispielsweise ein digitaler Signalprozessor (DSP) oder mittels analoger Komponenten realisiert. Mittels der Signalverarbeitungseinheit wird zweckmäßigerweise die Verifikation durchgeführt, und/oder insbesondere die physikalischen Eigenschaften ermittelt.

Beispielsweise ist der Sensor mittels des etwaigen Mikrofons oder eines anderen Mikrofons gebildet. Hierbei wird die manuelle Betätigung insbesondere aufgrund des bei dem Aufschlagen/Auftreten der Hand auf ein Gehäuse des Hörgeräts entstehenden Geräuschs erfasst. Alternativ oder in Kombination hierzu erfolgt das Erfassen aufgrund von Windgeräuschen, die von der Bewegung der Hand hervorgerufenen werden. Dabei ist es jeweils möglich, dass entsprechende Geräusche auch anderweitig erzeugt werden, wobei aufgrund der Verifikation die fälschlich erfassten manuelle Betätigungen aussortiert werden.

In einer Alternative ist der Sensor ein Beschleunigungssensor. Falls mittels der Hand das Gehäuse des Hörgeräts berührt wird, wird dieses kurzzeitig bewegt, und die aufgrund dessen erfolgende Beschleunigung wird mittels des Sensors erfasst. Hier ist es möglich, dass das Hörgerät aufgrund einer Kopfbewegung des Nutzers, beispielsweise im Rahmen einer körperlichen Betätigung, entsprechend bewegt wird. Aufgrund der Verifikation werden diese fälschlicherweise erfassten manuellen Betätigung ebenfalls aussortiert.

Besonders bevorzugt ist der Sensor ein kapazitiver Sensor. Bei Betrieb wird mittels dessen insbesondere ein zeitlich veränderliches elektromagnetisches Feld erstellt und ein sich ergebender Stromfluss zwischen zwei Elektroden des kapazitiven Sensors ermittelt. Der Stromfluss ist dabei Abhängig von der Menge/Anordnung von elektrisch leitfähigen Materialien in der Umgebung. Somit könnte beispielsweise aufgrund von vorhandener Feuchtigkeit und/oder einer Verformung des Ohrs fälschlicherweise die manuelle Betätigung erfasst werden. Jedoch wird in diesen Fällen das Testsignal nicht übermäßig verfälscht, sodass mittels der Verifikation die fälschlich erfassten manuellen Betätigungen ebenfalls aussortiert werden. Auch ist ein derartiger Sensor vergleichsweise kostengünstig, kleinbauend, und ein Betrieb ist vergleichsweise sparsam.

Beispielsweise ist das weitere Gerät ein Smartphone/Wearable, auf dem insbesondere eine entsprechende App durchgeführt wird, mittels dessen das Senden des Testsignals zu dem Hörgerät veranlasst wird. Das Smartphone/Wearable kann hierbei auch für andere Zwecke genutzt werden bzw. Nutzer hat dieses bereits. Somit sind Herstellungskosten für das Hörgerätesystem verringert. Alternativ hierzu ist das weitere Gerät ein weiteres Hörgerät. Dieses ist beispielsweise unterschiedlich zu dem Hörgerät. Besonders bevorzugt jedoch sind die beiden Hörgeräte zueinander baugleich und unterscheiden sich insbesondere lediglich anhand der geometrischen Ausgestaltung, wobei eines der beiden Hörgeräte für das linke und das andere für das rechte Ohr eines Trägers geeignet, insbesondere vorgesehen und eingerichtet, sind. Somit ist das Hörgerätesystem insbesondere binaural ausgestaltet. Aufgrund einer derartigen Ausgestaltung ist es möglich, bei beiden Hörgeräten jeweils eine entsprechende manuelle Betätigung zu erfassen und zu verifizieren, sodass eine entsprechende Eingabe erkannt ist. Diese gilt beispielsweise jeweils lediglich für das Hörgerät, bei dem die manuelle Betätigung erfolgte. Somit können die Hörgeräte unterschiedlich bedient werden. Auch ist es möglich, Gleichteile zu verwenden, weswegen Herstellungskosten reduziert sind.

Die Erfindung betrifft ferner ein Hörgerät, das geeignet, insbesondere vorgesehen und eingerichtet ist, einen Bestandteil eines derartigen Hörgerätesystems zu bilden.

Die im Zusammenhang mit dem Verfahren beschriebenen Weiterbildungen und Vorteile sind sinngemäß auch auf das Hörgerätesystem / das Hörgerät zu übertragen und umgekehrt.

Nachfolgend wird ein Ausführungsbeispiel der Erfindung anhand einer Zeichnung näher erläutert. Darin zeigen:
- Fig. 1: schematisch einen Nutzer, der ein Hörgerätesystem trägt,
- Fig. 2: ein Verfahren zum Betrieb des Hörgerätesystems, und
- Fig. 3: den zeitlichen Verlauf des RSSI eines mittels einer ersten Funkkommunikationseinrichtung des Hörgeräts empfangenen Signals.

Einander entsprechende Teile sind in allen Figuren mit den gleichen Bezugszeichen versehen.

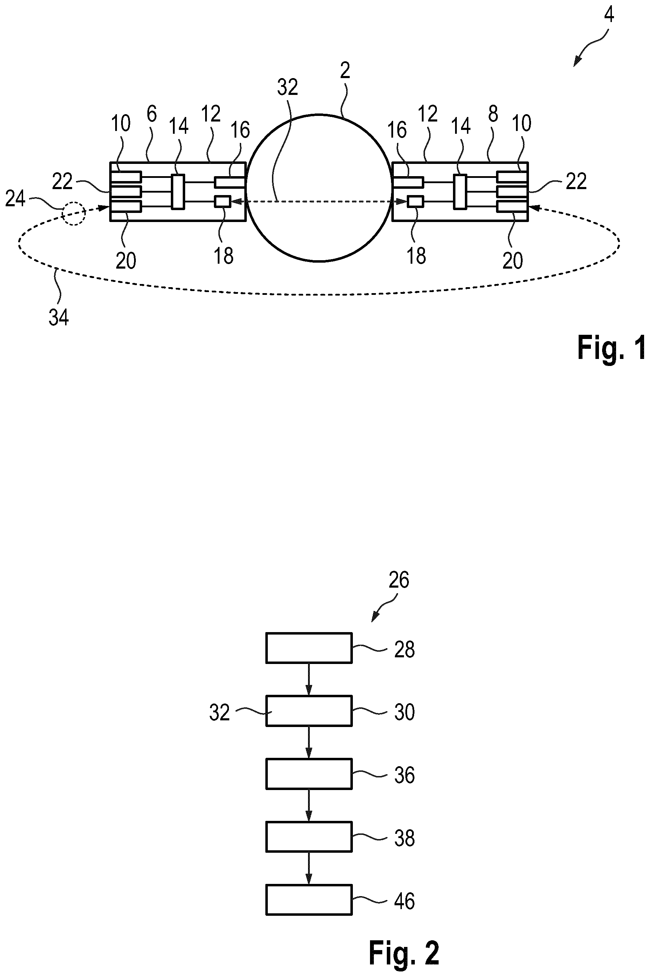

In Figur 1 ist schematisch in einer Draufsicht ein Nutzer 2 eines Hörgerätesystems 4 dargestellt. Der Nutzer 2 trägt das Hörgerätesystem 4, das als ein Hörhilfegerätesystem ausgestaltet. Mit anderen Worten erfolgt mittels des Hörgerätesystems 4 eine Kompensation eines teilweisen Hörverlust des Nutzers 2. Das Hörgerätesystem 4 weist ein Hörgerät 6 und ein weiteres Hörgerät 8 auf, die jeweils Hörhilfegeräte sind. Das Hörgerät 6 und das weitere Hörgerät 8 sind zueinander spiegelbildlich und daher baugleich. Mit anderen Worten unterscheiden sich die beiden Hörgeräte 6, 8 lediglich aufgrund der Geometrie, und eines der Hörgeräte 6, 8 ist dem linken Ohr und das andere dem rechten Ohr des Nutzers 2 zugeordnet.

Jedes Hörgerät 6, 8 weist ein Mikrofon 10 auf, mittels dessen bei Betrieb ein Umgebungsschall erfasst wird. Das Mikrofon 10 ist innerhalb eines jeweiligen Gehäuses 12 angeordnet und signaltechnisch mit einer Signalverarbeitungseinheit 14 verbunden. Mittels dieser werden die mittels des jeweiligen Mikrofons 10 anhand des Umgebungsschalls erstellten Signal bearbeitet und an einen Hörer 16 geleitet. Mittels des Hörers 16 wiederum werden die bearbeiteten Signale als Schall in einen Gehörgang des Nutzers 2 ausgegeben. Aufgrund der an den Hörverlust des Nutzers 2 angepassten Bearbeitung der Signale mit der Signalverarbeitungseinheit 14 ist eine Verständlichkeit für diesen verbessert. Die Gehäuse 12 sind dabei derart ausgestaltet, dass sich diese innerhalb des Gehörgangs befinden, sodass die Hörgeräte 6, 8 lediglich vergleichsweise gering sichtbar sind.

Jedes Hörgerät 6, 8 weist ferner eine zweite Funkkommunikationseinrichtung 18 auf, mittels derer ein Signalaustausch zwischen den beiden Hörgeräten 6,8 ermöglicht ist. Hierfür wird das magnetische Feld genutzt, und die zweite Funkkommunikationseinrichtung nutzte somit magnetische Induktion (NFMI; "Near Field Magnetic Induction"), um Daten zwischen den beiden Hörgeräten 6, 8 zu übertragen. Anhand der übertragenen Daten erfolgt ebenfalls eine Bearbeitung der mittels des jeweiligen Mikrofons 10 bereitgestellten, sodass ein räumlicher Eindruck für den Nutzer 2 verbessert ist.

Auch weist jedes Hörgerät 6, 8 eine erste Funkkommunikationseinrichtung 20 auf, die ebenfalls mit der Signalverarbeitungseinheit 14 verbunden ist. Die erste Funckommunikationseinrichtung 20 genügt dem Bluetooth-Standard, und mittels dieser ist eine signaltechnische Verbindung zu beispielsweise einem Smartphone ermöglicht. Auch ist eine signaltechnische Verbindung der beiden Hörgeräte 6, 8 untereinander mittels der ersten Funkkommunikationseinrichtung 20 ermöglicht, wobei die übertragbare Datenmenge im Vergleich zu der zweiten Funkkommunikationseinrichtung 18 vergrößert ist.

Auch weist jedes Hörgerät 6, 8 einen Sensor 22 auf, der dem dem Nutzer 23 abgewandten Ende des Gehäuses 12 zugeordnet ist und der als ein kapazitiver Sensor ausgestaltet ist. Mittels dessen wird die Annäherung einer Hand 24 oder eines Fingers des Nutzers 2 an das jeweilige Gehäuse 12 erfasst, sodass beispielsweise eine Einstellung der Signalverarbeitungseinheit 14 verändert wird. Zusammenfassend umfasst das Hörgerätesystem 4 somit das Hörgerät 6, das die erste Funkkommunikationseinrichtung 20 und den Sensor 22 umfasst, der als kapazitiver Sensor ausgebildet ist. Ferner umfasst das Hörgerätesystem 4 das weitere Hörgerät 8, das ein weiteres Gerät des Hörgerätesystems 4 bildet, und das spiegelbildlich zu dem Hörgerät 6 aufgebaut ist.

In Figur 2 ist ein Verfahren 26 zum Betrieb des Hörgerätesystems 4 dargestellt, das zumindest teilweise mittels der beiden Signalverarbeitungseinheiten 14 durchgeführt wird. Das Hörgerätesystem 4 ist gemäß dem Verfahren 26 und einem weiteren, nicht näher dargestellten Verfahren betrieben, bei dem die Rollen des Hörgeräts 6 und des weiteren Hörgeräts 8 vertauschte sind.

Bei dem Verfahren 26 wird in einem ersten Arbeitsschritt 28 mittels des Sensors 22 eine manuelle Betätigung erfasst. Diese wird erfasst, wenn sich die Hand 24 dem Sensor 22 um mehr als einen bestimmten Abstand genähert hat, was anhand von entsprechenden Messdaten des Sensors 22 ermittelt wird. Mit anderen Worten ist, wenn ein mittels des Sensors 22 bereitgestelltes Messsignal, nämlich ein bestimmter elektrischer Strom, größer als ein Schwellwert ist, die manuelle Betätigung erfasst. Derartige Messdaten können sich jedoch auch ergeben, wenn sich das Gehäuse 12 in dem zugeordneten Ohr bewegt, beispielsweise bei einer körperlichen Aktivität des Nutzers 2.

In einem sich anschließenden zweiten Arbeitsschritt 30 wird von dem Hörgerät 6 mittels der zweiten Funkkommunikationseinrichtung 18 eine Aufforderung 32 zur Abgabe eines Testsignals 34 von dem Hörgerät 6 zu dem weiteren Hörgerät 8, und somit zu dem weiteren Gerät, gesendet. Da die zweite Funkkommunikationseinrichtung 18 verwendet wird, wird die Aufforderung 32 mittels magnetischer Induktion zu dem weiteren Gerät übertragen. Mittels der Aufforderung 32 wird das weitere Gerät zur Abgabe des Testsignals 34 gebeten/veranlasst.

In einem sich anschließenden dritten Arbeitsschritt 36 wird das Testsignal 34 von dem weiteren Gerät, also dem weiteren Hörgerät 8, zu dem Hörgerät 6 gesandt und von diesem anschließend empfangen. Zum Aussenden/Empfangen wird die jeweilige erste Funkkommunikationseinrichtung 20 verwendet, sodass das Testsignal 34 mittels Bluetooth zu dem Hörgerät 6 übertragen wird. Beim Aussenden ist die Sendeleistung der ersten Funkkommunikationseinrichtung 20 im Vergleich zum Normalbetrieb erhöht, und das Testsignal 34 wird mehrkanalig von dem weiteren Hörgerät 8 ausgesandt und somit mehrkanalig zu dem Hörgerät 6 übertragen. Wenn sich die Hand 24 im Bereich des Sensors 20 befindet, wird das Testsignal 34 durch die Hand 24 zumindest teilweise gedämpft, und die Resonanzfrequenz der ersten Funkkommunikationseinrichtung 20 des Hörgeräts 6 ist verändert.

In einem sich anschließenden vierten Arbeitsschritt 38 werden die physikalischen Eigenschaften des empfangenen Testsignals 34 ermittelt, wobei dies für sämtliche Kanäle des Testsignals 34 durchgeführt wird. Hierfür wird ermittelt, welche Resonanzfrequenz die erste Funkkommunikationseinrichtung 20 beim Empfangen des Testsignals 34 aufwies. Diese wird mit einer Resonanzfrequenz verglichen, die die erste Funkkommunikationseinrichtung 20 aufweist, wenn keine Hand 24 vorhanden ist, und die in einem nicht näher dargestellten Speicher der Signalverarbeitungseinheit 14 hinterlegt ist. Mit anderen Worten wird die Resonanz(frequenz)verschiebung ermittelt. Wenn die Hand 24 somit vorhanden ist, ist die Resonanzfrequenz verschoben.

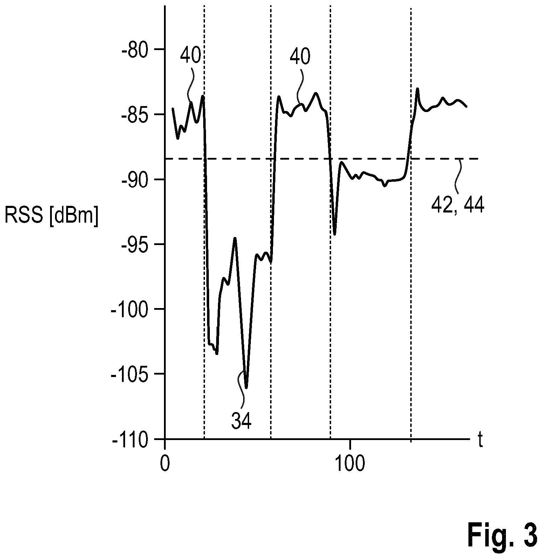

Alternativ oder in Kombination hierzu wird der RSSI ("Received Signal Strength Indication") des Testsignals 34 ermittelt. In Figur 3 ist der RSSI des Testsignals 34 sowie von weiteren Signale 40 dargestellt, wobei die weiteren Signale 40 bei Betrieb des Hörgeräts 6 mittels der ersten Funkkommunikationseinrichtung 20 empfangen von einem nicht näher dargestellten Smartphone werden, und Steuerungsparametern enthalten. Während des Normalbetriebs befindet sich dabei die Hand 24 nicht im Bereich des Hörgeräts 6, weswegen dann der RSSI erhöht ist. Wenn sich die Hand 24 im Bereich des Sensors 20 und somit auch im Bereich der erste Funkkommunikationseinrichtung 20 befindet, ist der RSSI verringert und zumindest kleiner als ein Mittelwert 42 des RSSI der sonstigen mittels der ersten Funckommunikationseinrichtung 20 empfangenen weiteren Signale 40.

Der Mittelwert 42 stellt somit einen Vergleichswert 44 dar, und es wird überprüft, ob der RSSI des Testsignals 34 kleiner als der Vergleichswert 44 ist, bzw. ob die Resonanzfrequenz um mehr als einen bestimmten Wert verschoben ist. Zusammenfassend werden in dem vierten Arbeitsschritt 38 somit die physikalischen Eigenschaften des empfangenen Testsignals 34 ermittelt, nämlich entweder die Resonanzfrequenz oder der RSSI. Wenn die Resonanz um mehr als einen bestimmten Wert verschoben ist, ist die manuelle Betätigung verifiziert. Auch ist die manuelle Betätigung verifiziert, wenn der RSSI des Testsignals 34 geringer als der Vergleichswert 44 ist, wobei als Vergleichswert 44 der Mittelwert 42 der RSSI der mittels der ersten Funkkommunikationseinrichtung 20 empfangenen weiteren Signalen 40 herangezogen wird.

Wenn die Verifizierung erfolgt ist, wird diese als Eingabe herangezogen, und es wird ein fünfter Arbeitsschritt 46 durchgeführt. In diesem wird eine bestimmte Funktion des Hörgeräts 6 durchgeführt und zum Beispiel ein Parametersatz der Signalverarbeitungseinheit 14 verändert. Die durchgeführte Funktion korrespondiert hierbei zu der Art der manuellen Betätigung, als ob die Hand 24 vergleichsweise lange, kurz oder mehrmalig zu dem Sensor 22 bewegt wurde.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Nutzer
- 4: Hörgerätesystem
- 6: Hörgerät
- 8: weiteres Hörgerät
- 10: Mikrofon
- 12: Gehäuse
- 14: Signalverarbeitungseinheit
- 16: Hörer
- 18: zweite Funkkommunikationseinrichtung
- 20: erste Funkkommunikationseinrichtung
- 22: Sensor
- 24: Hand
- 26: Verfahren
- 28: erster Arbeitsschritt
- 30: zweiter Arbeitsschritt
- 32: Aufforderung
- 34: Testsignal
- 36: dritter Arbeitsschritt
- 38: vierter Arbeitsschritt
- 40: weitere Signal
- 42: Mittelwert
- 44: Vergleichswert
- 46: fünfter Arbeitsschritt

## Patentansprüche

1. Verfahren (26) zum Betrieb eines Hörgerätesystems (4), das ein einen Sensor (22) und eine erste Funkkommunikationseinrichtung (20) aufweisendes Hörgerät (6) und ein weiteres Gerät umfasst, bei welchem
- mittels des Sensors (22) eine manuelle Betätigung erfasst wird,
- von dem Hörgerät (6) eine Aufforderung (32) zur Abgabe eines Testsignals (34) an das weitere Gerät gesandt wird,
- mittels des weiteren Geräts das Testsignal (34) an das Hörgerät (6) gesandt und von diesem mittels der ersten Funkkommunikationseinrichtung (20) empfangen wird, und
- anhand von physikalischen Eigenschaften des empfangenen Testsignals (34) die manuelle Betätigung verifiziert wird.

2. Verfahren (26) nach Anspruch 1,
**dadurch gekennzeichnet,**
**dass** die Aufforderung (32) mittels magnetischer Induktion zu dem weiteren Gerät übertragen wird.

3. Verfahren (26) nach Anspruch 1 oder 2,
**dadurch gekennzeichnet,**
**dass** das Testsignal (34) mittels Bluetooth zu dem Hörgerät (6) übertragen wird.

4. Verfahren (26) nach einem der Ansprüche 1 bis 3,
**dadurch gekennzeichnet,**
**dass** das Testsignal (34) mehrkanalig zu dem Hörgerät (6) übertragen wird.

5. Verfahren (26) nach einem der Ansprüche 1 bis 4,
**dadurch gekennzeichnet,**
**dass** als physikalische Eigenschaft eine Resonanzverschiebung herangezogen wird.

6. Verfahren (26) nach einem der Ansprüche 1 bis 4,
**dadurch gekennzeichnet,**
**dass** als physikalische Eigenschaft der RSSI des Testsignals (34) herangezogen wird, der zur Verifikation mit einem Vergleichswert (44) verglichen wird.

7. Verfahren (26) nach Anspruch 6,
**dadurch gekennzeichnet,**
**dass** als Vergleichswert (44) ein Mittelwert (42) der RSSI von mittels der ersten Funkkommunikationseinrichtung (20) empfangenen weiteren Signalen (40) herangezogen wird.

8. Hörgerätesystem (4), das ein einen Sensor (22) und eine erste Funkkommunikationseinrichtung (20) aufweisendes Hörgerät (6) und ein weiteres Gerät aufweist, und das gemäß einem Verfahren (26) nach einem der Ansprüche 1 bis 7 betrieben ist.

9. Hörgerätesystem (4) nach Anspruch 8,
**dadurch gekennzeichnet,**
**dass** der Sensor (22) ein kapazitiver Sensor ist.

10. Hörgerätesystem (4) nach Anspruch 8 oder 9,
**dadurch gekennzeichnet,**
**dass** das weitere Gerät ein weiteres Hörgerät (8) ist.
